# FASCICULE DE BREVET EUROPEEN

(11) **EP 2 230 134 B1**
(45) Date de publication et mention de la délivrance du brevet: **10.05.2017**
(21) Numéro de dépôt: 10156641.2
(22) Date de dépôt: 16.03.2010
(51) Int. Cl.: B60R 16/03

(54) **Dispositif pour commander un composant de commutation**
Vorrichtung zur Steuerung eines Schaltbauteils
Device for controlling a switching component

(30) Priorité: 18.03.2009 FR 0951730
(43) Date de publication de la demande: 22.09.2010
(73) Titulaire: Peugeot Citroën Automobiles SA, 78140 Vélizy-Villacoublay (FR)
(72) Inventeur: Ledez, Frédéric, 78350, JOUY-EN-JOSAS (FR); Dhainaut, Jean-Marc, 75015, PARIS (FR)

(56) Documents cités:
- EP-A- 1 759 929
- WO-A-01/97379
- DE-A1-102006 016 657
- US-A- 5 389 824

## Description

La présente invention concerne un dispositif pour commander de manière sécurisée, un composant de commutation, notamment un composant de commutation embarqué dans un véhicule automobile.

On connaît déjà des dispositifs permettant de commander de manière sécurisée un composant de commutation.

Le document US4853820 décrit un système disjoncteur pour réduire ou interrompre au moyen d'éléments analogiques, en d'autres termes matériels, un courant d'alimentation dans un circuit électrique en cas de surcharge puis pour rétablir le courant de manière contrôlée.

Des sollicitations de commutateurs de sécurité tels que des disjoncteurs ou autres, au-delà de leur limites de fonctionnement, en terme de charge ou de fréquence, conduisent à une fatigue qu'il est utile de contrôler par logiciel.

Le document US5777894 prévoit de contrôler une consommation d'organes de véhicule automobile par logiciel. Cependant un contrôle logiciel peut poser des problèmes de sécurité dans un véhicule si les éléments logiciels se mettent en défaut.

Le document FR2852709 décrit un dispositif pour sécuriser des signaux logiciels de commande générés en sorties d'une unité de traitement numérique embarquée qui est associée à des moyens de commutation de puissance d'alimentation d'organes d'un véhicule. Des moyens de maintien des signaux de commande logiciels sont insérés entre les sorties de l'unité de traitement et les moyens de commutation de façon à assurer une continuité de la commande en cas de disparition du signal logiciel, par exemple lors de réinitialisation de l'unité de traitement numérique. Cependant il n'est pas possible d'enclencher l'alimentation d'un organe si l'unité de traitement numérique n'est pas opérationnelle au moment de l'enclenchement souhaité. Le document WO01/97379 décrit un dispositif pour commander un composant de commutation selon le préambule de la revendication 1. Pour remédier aux inconvénients de l'état de la technique, un objet de l'invention est un dispositif pour commander un composant de commutation en activant un signal filaire de commande. Le dispositif comprend un bloc recevant en entrées le signal filaire de commande et un signal d'autorisation, le bloc étant agencé pour produire en sortie un signal validé de commande qui est activé lorsque le signal filaire de commande est activé si le signal d'autorisation est activé, et qui est maintenu activé après activation tant que le signal filaire de commande est activé et en ce que le dispositif comprend un connecteur pour commander le composant de commutation en activant un signal logiciel de commande en redondance avec le signal filaire de commande.

Particulièrement, le connecteur comprend une porte disjonctive recevant en entrées le signal produit en sortie du bloc et le signal logiciel de commande.

Plus particulièrement le bloc comprend une porte disjonctive recevant en entrées le signal d'autorisation et le signal produit en sortie du bloc pour générer un signal d'approbation, et une porte conjonctive recevant en entrées le signal filaire de commande et ledit signal d'approbation pour générer le signal produit en sortie du bloc.

Particulièrement, le dispositif comprend un microcontrôleur recevant en entrée un état de fonctionnement du composant de commutation et agencé pour activer le signal d'autorisation en fonction de l'état de fonctionnement du composant de commutation.

Plus particulièrement, l'état de fonctionnement du composant de commutation est utilisé pour estimer un niveau de fatigue du composant et en déduire son degré de fiabilité.

Parmi différentes alternatives possibles de mise en oeuvre, le microcontrôleur est relié à un bus multiplexé de communication pour activer le signal logiciel de commande en fonction d'informations reçues sur le bus multiplexé de communication.

Plus particulièrement, le microcontrôleur reçoit le signal filaire de commande de façon à connaître l'état activé ou non du composant de commutation.

Utilement, le composant de commutation est agencé pour alimenter une unité de commande électronique de frein.

D'autres buts, caractéristiques, détails et avantages de l'invention apparaîtront dans la description qui suit d'un mode de réalisation préféré, non limitatif de l'objet et de la portée de la présente demande de brevet, accompagnée de dessins, dans lesquels :
- la figure 1 est un schéma électrique de dispositif classique avec commande redondante filaire et logicielle;
- la figure 2 est un schéma électrique de dispositif conforme à l'invention;
- la figure 3 est un schéma électrique de dispositif conforme à l'invention pour, à titre d'exemple d'application, une commande d'unité de freinage.

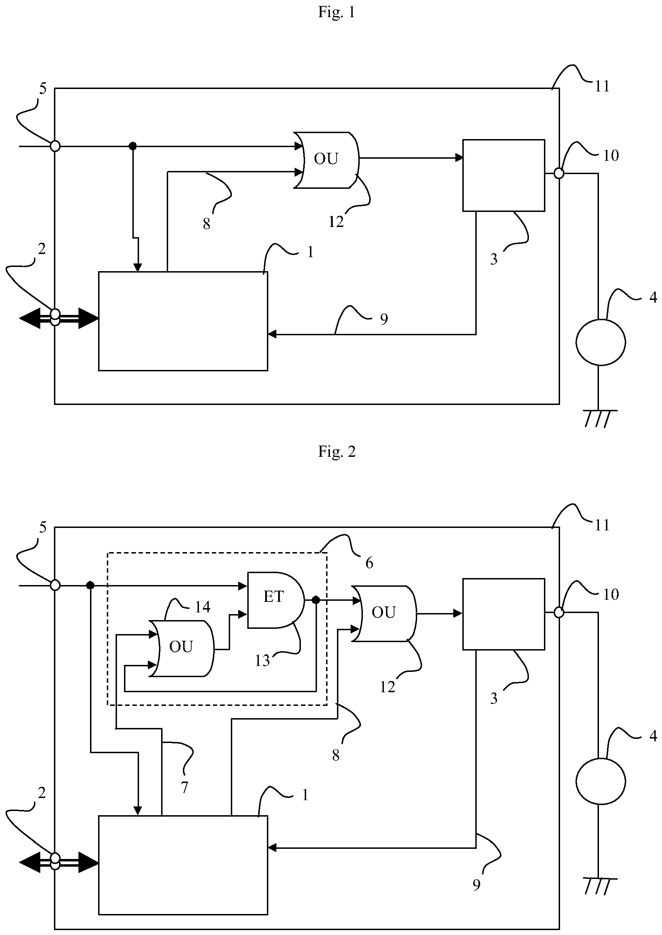

La figure 1 montre un exemple de dispositif qui permet de sécuriser l'état d'une sortie par la redondance d'un signal logiciel de commande 8 et d'un signal filaire de commande 5 de nature matérielle (hardware en anglais). Un calculateur 11 comprend un étage de sortie équipé d'un ou plusieurs composants de commutation 3 reliés chacun à une borne de sortie 10 pour alimenter ou non une charge 4 en énergie électrique. Le calculateur 11 comprend aussi un microcontrôleur 1 agencé pour générer le signal logiciel de commande et un connecteur 12 pour commander le composant de commutation 3 en activant le signal logiciel de commande 8 en redondance avec le signal filaire de commande 5. Dans l'exemple illustré par la figure 1, le connecteur 12 est une porte disjonctive dont la sortie est active lorsque le signal logiciel de commande 8 ou le signal filaire de commande 5 est actif. On peut aussi réaliser le connecteur 12 de toute autre manière dont résulte une redondance d'un signal par rapport à l'autre. A titre illustratif, on peut citer une mise en parallèle de deux contacts de relais, la fermeture de l'un étant pilotée par le signal logiciel de commande 8, la fermeture de l'autre étant pilotée par le signal filaire de commande 5.

La redondance par le signal filaire de commande 5 permet d'assurer l'activation du composant de commutation 3 dans les conditions qui permettent au signal filaire de commande 5 d'être actif sur une borne d'entrée du calculateur 11, par exemple par fermeture d'un contact à la source.

La redondance par le signal logiciel de commande 8 permet d'assurer l'activation du composant de commutation 3 dans les conditions qui sont établies par le microcontrôleur 1. Pour établir les conditions d'activation du composant de commutation 3, le microcontrôleur 1 reçoit en entrée, un signal d'état 9 du composant de commutation 3 relatif au fonctionnement du composant de commutation 3. D'autre part, le microcontrôleur 1 est relié à un bus multiplexé 2 de communication. Le microcontrôleur 1 est alors agencé pour activer le signal logiciel de commande 8 en fonction d'informations reçues sur le bus multiplexé 2 de communication et en fonction de l'état de fonctionnement du composant de commutation 3.

Une activation du signal filaire de commande 5 commande, notamment une mise en conduction du composant de commutation 3, indépendamment de son état 9.

Le dispositif, décrit à présent en référence à la figure 2, permet d'interdire une mise en conduction du composant de commutation par le signal filaire de commande si le composant de commutation montre des signes de faiblesse pouvant mener à sa défaillance. On évite ainsi les risques de perte de fonctions, de destruction du calculateur et de sécurité qui peuvent résulter d'une défaillance du composant de commutation. En effet, quand le composant subit un niveau considérable de stress thermomécanique ou électrique, la fiabilité du composant décroît et son activation pourrait mener à sa défaillance avec pour conséquence d'engendrer un comportement intempestif, voire dangereux du système. Le stress désigne ici un niveau de contraintes thermiques, mécaniques, électriques ou de toute autre nature physique, auxquelles est soumis le composant de commutation en fonctionnement.

Sur la figure 2, le signal filaire de commande n'attaque plus directement le connecteur 12. Le dispositif comprend un bloc 6 recevant en entrées le signal filaire de commande 5 et un signal d'autorisation 7. De façon à produire en sortie un signal validé de commande qui est activé lorsque le signal filaire de commande est activé si le signal d'autorisation est activé, le bloc 6 comprend une porte conjonctive 13 recevant en entrées le signal filaire de commande 5 et un signal d'approbation dont l'activation est conditionnée par un état activé du signal d'autorisation 7. Pour générer le signal d'approbation, le bloc 6 comprend une porte disjonctive 14 recevant en entrées le signal d'autorisation 7 et le signal produit en sortie du bloc 6, de sorte que le signal produit en sortie du bloc 6 est maintenu activé après activation tant que le signal filaire de commande est activé, même si le signal d'autorisation 7 disparaît.

Dans l'exemple illustré par la figure 2, le bloc 6 est constitué d'une porte conjonctive et d'une porte disjonctive. On peut aussi réaliser le bloc 6 de toute autre manière menant au même comportement.

Le connecteur 12, ici encore réalisé au moyen d'une porte disjonctive recevant en entrées le signal produit en sortie du bloc 6 et le signal logiciel de commande 8, permet de redonder une commande logicielle issue du microcontrôleur par une commande filaire portée par le signal 5. Grâce au bloc 6 intercalé entre la borne d'entrée du signal filaire 5 sur le calculateur 11 et le connecteur 12, la redondance filaire est conditionnée lors de son passage à l'état actif par le signal d'autorisation 7.

Pour générer le signal d'autorisation 7, le microcontrôleur 1 reçoit l'état 9 du composant de commutation 3. De la sorte, le microcontrôleur 1 peut interdire le passage à l'état actif du signal de redondance filaire produit en sortie du bloc 6 si le microcontrôleur 1 détecte que le composant de commutation 3 a subit durant sa vie trop de stress avec pour conséquence d'être dans un état de fiabilité ne permettant pas de garantir un fonctionnement sûr. Le composant de commutation 3 est de type transistor (MOSFET ou autre), relais, composant de puissance intelligent(SMARTPOWER ou autre) ou tout autre type de contacteur. L'état 9 de diagnostique du composant de commutation 3, est établi soit de manière intégrée dans le composant de commutation, dans le cas de composants de puissance intelligent avec diagnostique intégré, soit réalisé par le microcontrôleur 1 à partir de la relecture d'un état de sortie du calculateur 11 ou de capteurs, par exemple de température. Ainsi, le microcontrôleur 1 recevant en entrée l'état 9 de fonctionnement du composant de commutation 3, est agencé pour activer le signal d'autorisation 7 en fonction de l'état de fonctionnement du composant de commutation 3.

Grâce à l'auto maintien procuré sur la redondance filaire par le bloc 6, la commande filaire ne peut être désactivée par une éventuelle mise en défaut du microcontrôleur tant que la commande filaire reste active. La redondance sur la commande logicielle est assurée pour se prémunir d'une survenance de défaut du microcontrôleur après commutation du composant 3. La constitution matérielle du bloc 6 renforce la sécurité.

Le connecteur 12 permet aussi de redonder la commande filaire du signal 5 par la commande logicielle issue du microcontrôleur. Cette redondance réciproque donne une protection vis-à-vis d'une perte de la commande filaire. La redondance logicielle élaborée par le microcontrôleur 1, est avantageusement conditionnée par un ou plusieurs paramètres transmis via le bus de communication 2, par exemple pour maintenir la commande du composant 1 tant que la vitesse du véhicule est non nulle ou tant que la clé de contact n'est pas en position coupée.

Le microcontrôleur 1 reçoit le signal filaire de commande 5 de façon à connaître l'état de commande du composant de commutation, connaissance qui est utile pour la détermination du niveau de fatigue du composant de commutation.

La quantité de stress subie par le composant de commutation, lors de courts-circuits ou de surcharges de la sortie, est comptabilisée par le microcontrôleur. Lorsque cette quantité atteint un seuil critique vis-à-vis de la fiabilité du composant de commutation, le microcontrôleur positionne le signal d'autorisation à 0 pour interdire les commandes filaires. Le signal d'autorisation, est aussi positionné par le microcontrôleur à 0 quand le microcontrôleur est non alimenté, en veille, en réinitialisation, en mode dégradé. Le signal d'autorisation, est positionné par le microcontrôleur à 1 quand le logiciel du microcontrôleur est opérationnel et que la quantité de stress n'a pas atteint le seuil critique.

Le seuil critique est défini à partir des données de fiabilité du composant, en utilisation nominale et/ou selon le type et la quantité de stress appliqué. Le seuil critique est aussi défini en fonction des exigences de disponibilité et de sécurité du système.

La charge 4 peut être un actionneur, un autre calculateur ou tout autre organe consommateur d'énergie électrique du véhicule.

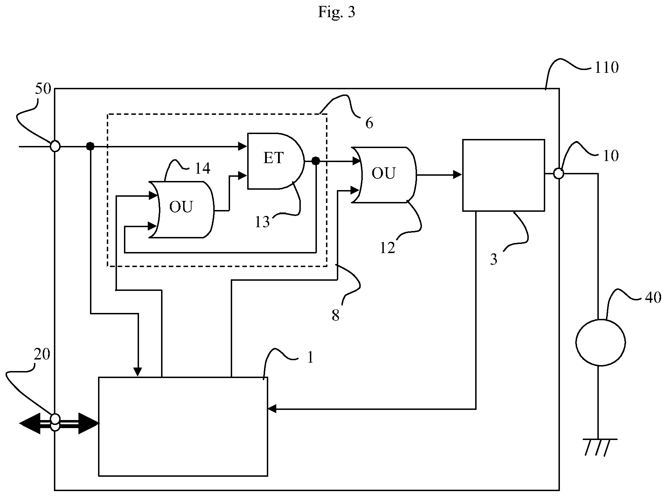

En référence à la figure 3, le composant de commutation 3 est agencé, à titre d'exemple d'application, pour alimenter une unité de commande électronique 40 de frein, typiquement entre calculateur 110 BSI (boîtier de servitude intelligent) et UCE (unité de commande électronique) 40 de frein.

Le dispositif selon l'invention permet au calculateur 110 d'être robuste contre une perte de signal 50 de type +APC (plus après contact) en roulant en cas de fausse manipulation du conducteur ou de défaillance du contacteur antivol, grâce à la redondance par la commande logicielle 8. La commande logicielle est maintenue tant que la vitesse du véhicule transmise par un bus 20 de type CAN, est non nulle.

Le dispositif selon l'invention permet aussi au calculateur 110 d'être robuste contre une défaillance du calculateur BSI 110, en cas de panne, de réinitialisation ou de bogue logiciel, grâce à la redondance par la commande filaire 50 +APC venant du contacteur antivol.

Cette robustesse réciproque est conjuguée à la protection du composant de commutation contre les risques liés à sa défaillance en cas de courts-circuits ou de surcharge électrique prolongée.

## Revendications

1. Dispositif pour commander un composant de commutation (3) en activant un signal filaire de commande (5), comprenant un bloc (6) recevant en entrées le signal filaire de commande et un signal d'autorisation (7), le bloc (6) étant agencé pour produire en sortie un signal validé de commande qui est activé lorsque le signal filaire de commande est activé si le signal d'autorisation est activé, et qui est maintenu activé après activation tant que le signal filaire de commande est activé, **caractérisé en ce qu'**il comprend un connecteur (12) pour commander le composant de commutation (3) en activant un signal logiciel de commande (8) en redondance avec le signal filaire de commande.

2. Dispositif selon la revendication 1, **caractérisé en ce que** le connecteur (12) comprend une porte disjonctive recevant en entrées le signal produit en sortie du bloc (6) et le signal logiciel de commande (8).

3. Dispositif selon l'une des revendications précédentes, **caractérisé en ce que** le bloc (6) comprend :
- une porte disjonctive (14) recevant en entrées le signal d'autorisation (7) et le signal produit en sortie du bloc (6) pour générer un signal d'approbation;
- une porte conjonctive (13) recevant en entrées le signal filaire de commande (5) et ledit signal d'approbation pour générer le signal produit en sortie du bloc (6).

4. Dispositif selon l'une des revendications précédentes, **caractérisé en ce qu'**il comprend un microcontrôleur (1) recevant en entrée un état (9) de fonctionnement du composant de commutation (3) et agencé pour activer le signal d'autorisation (7) en fonction de l'état de fonctionnement du composant de commutation (3).

5. Dispositif selon la revendication 4, **caractérisé en ce que** le microcontrôleur (1) est agencé pour estimer un niveau de fatigue du composant de commutation (3) en fonction de l'état (9) de fonctionnement du composant de commutation (3).

6. Dispositif selon la revendication 4, **caractérisé en ce que** le microcontrôleur (1) est relié à un bus multiplexé (2) de communication et **en ce qu'**il est agencé pour activer le signal logiciel de commande (8) en fonction d'informations reçues sur le bus multiplexé (2) de communication.

7. Dispositif selon l'une des revendications précédentes, **caractérisé en ce que** le composant de commutation (3) est agencé pour alimenter une unité de commande électronique (40) de frein.

## Patentansprüche

1. Vorrichtung zur Steuerung eines Schaltbauteils (3) durch Aktivieren eines verdrahteten Steuersignals (5), die einen Block (6) umfasst, der an den Eingängen das verdrahtete Steuersignal und ein Zulassungssignal (7) empfängt, wobei der Block (6) eingerichtet ist, um am Ausgang ein bestätigtes Steuersignal zu erzeugen, das aktiviert wird, wenn das verdrahtete Steuersignal aktiviert wird, wenn das Zulassungssignal aktiviert wird, und das nach der Aktivierung so lange aktiviert gehalten wird, wie das verdrahtete Steuersignal aktiviert ist, **dadurch gekennzeichnet, dass** sie einen Steckverbinder (12) zum Steuern des Schaltbauteils (3) durch Aktivieren eines Steuersoftwaresignals (8) in Redundanz mit dem verdrahteten Steuersignal umfasst.

2. Vorrichtung nach Anspruch 1, **dadurch gekennzeichnet, dass** der Steckverbinder (12) eine Trenntür umfasst, die an den Eingängen das Signal, das am Ausgang des Blocks (6) erzeugt wird, und das Steuersoftwaresignal (8) empfängt.

3. Vorrichtung nach einem der vorhergehenden Ansprüche, **dadurch gekennzeichnet, dass** der Block (6) Folgendes umfasst:
- einen Trennport (14), der an den Eingängen das Zulassungssignal (7) und das Signal, das am Ausgang des Blocks (6) erzeugt wird, empfängt, um ein Genehmigungssignal zu erzeugen,
- einen Verbindungsport (13), der an den Eingängen das verdrahtete Steuersignal (5) und das Genehmigungssignal empfängt, um das Signal, das am Ausgang des Blocks (6) erzeugt wird, zu erzeugen.

4. Vorrichtung nach einem der vorhergehenden Ansprüche, **dadurch gekennzeichnet, dass** sie einen Mikrocontroller (1) umfasst, der am Eingang einen Betriebszustand (9) des Schaltbauteils (3) empfängt und eingerichtet ist, um das Zulassungssignal (7) in Abhängigkeit von dem Betriebszustand des Schaltbauteils (3) zu aktivieren.

5. Vorrichtung nach Anspruch 4, **dadurch gekennzeichnet, dass** der Mikrocontroller (1) eingerichtet ist, um ein Ermüdungsniveau des Schaltbauteils (3) in Abhängigkeit von dem Betriebszustand (9) des Schaltbauteils (3) zu schätzen.

6. Vorrichtung nach Anspruch 4, **dadurch gekennzeichnet, dass** der Mikrocontroller (1) mit einem gemultiplexten Kommunikationsbus (2) verbunden ist, und dass er eingerichtet ist, um das Steuersoftwaresignal (8) in Abhängigkeit von Informationen, die auf dem gemultiplexten Kommunikationsbus (2) empfangen werden, zu aktivieren.

7. Vorrichtung nach einem der vorhergehenden Ansprüche, **dadurch gekennzeichnet, dass** das Schaltbauteil (3) eingerichtet ist, um eine elektronische Bremssteuereinheit (40) zu versorgen.

## Claims

1. A device for controlling a switching component (3) by activating a wired control signal (5), including a block (6) receiving as inputs the wired control signal and an authorization signal (7), the block (6) being arranged so as to produce at the outlet a validated control signal which is activated when the wired control signal is activated if the authorization signal is activated, and which is kept activated after activation as long as the wired control signal is activated, **characterized in that** it includes a connector (12) for controlling the switching component (3) by activating a control software signal (8) redundantly with the wired control signal.

2. The device according to Claim 1, **characterized in that** the connector (12) includes a disjunctive gate receiving as inputs the signal produced at the output of the block (6) and the software control signal (8).

3. The device according to one of the preceding claims, **characterized in that** the block (6) includes:
- a disjunctive gate (14) receiving as inputs the authorization signal (7) and the signal produced at the output of the block (6) to generate an approval signal;
- a conjunctive gate (13) receiving as inputs the wired control signal (5) and said approval signal to generate the signal produced at the output of the block (6).

4. The device according to one of the preceding claims, **characterized in that** it includes a microcontroller (1) receiving as input an operating status (9) of the switching component (3) and arranged to activate the authorization signal (7) as a function of the operating status of the switching component (3).

5. The device according to Claim 4, **characterized in that** the microcontroller (1) is arranged to estimate a fatigue level of the switching component (3) as a function of the operating status (9) of the switching component (3).

6. The device according to Claim 4, **characterized in that** the microcontroller (1) is connected to a multiplexed communication bus (2) and **in that** it is arranged to activate the control software signal (8) as a function of data received on the multiplexed communication bus (2).

7. The device according to one of the preceding claims, **characterized in that** the switching component (3) is arranged to supply an electronic brake control unit (40).
